(19) Europäisches Patentamt / European Patent Office / Office européen des brevets

(11) **EP 4 489 125 A1**

(12) **EUROPEAN PATENT APPLICATION**
published in accordance with Art. 153(4) EPC

(43) Date of publication:
**08.01.2025 Bulletin 2025/02**

(21) Application number: **22933930.4**

(22) Date of filing: **28.03.2022**

(51) International Patent Classification (IPC):
**H01M 4/525** (2010.01)　　**H01M 10/0567** (2010.01)

(52) Cooperative Patent Classification (CPC):
**H01M 4/525; H01M 10/0567; Y02E 60/10**

(86) International application number:
**PCT/CN2022/083300**

(87) International publication number:
**WO 2023/184071 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Zhangwan Town, Jiaocheng District
Ningde City
Fujian 352100 (CN)**

(72) Inventors:
• **CUI, Hui
Ningde City, Fujian 352100 (CN)**
• **LIU, Junfei
Ningde City, Fujian 352100 (CN)**
• **TANG, Chao
Ningde City, Fujian 352100 (CN)**
• **HAN, Junqiang
Ningde City, Fujian 352100 (CN)**

(74) Representative: **Klunker IP
Patentanwälte PartG mbB
Destouchesstraße 68
80796 München (DE)**

(54) **ELECTROCHEMICAL DEVICE, AND ELECTRONIC DEVICE COMPRISING SAME**

(57)　This application relates to an electrochemical apparatus and an electronic apparatus including the same. The electrochemical apparatus includes a positive electrode and an electrolyte. The electrolyte includes ethylene carbonate (EC), propylene carbonate (PC), and succinonitrile (SN). The positive electrode includes a positive electrode active material, where the positive electrode active material includes metal element A, and the metal element A includes at least one of the following elements: Mg, Zr, or Al. Based on a mass of the electrolyte, a mass percentage of SN is a%, a mass percentage of EC is b%, and a mass percentage of PC is c%, where $k=b/c$, $1.25 \leq k \leq 6$, and $a/k \geq 0.2$. Based on a mass of the positive electrode active material, a mass percentage of the metal element A is x%, where $0.01 \leq x \leq 1$. The foregoing electrochemical apparatus exhibits excellent high-temperature cycling performance and high-temperature interval cycling performance.

**EP 4 489 125 A1**

**Description**

**TECHNICAL FIELD**

This application relates to the field of energy storage technologies, and more specifically, to an electrochemical apparatus and an electronic apparatus including the same.

**BACKGROUND**

Due to advantages such as high energy density, relatively simple reaction mechanisms, high operating voltage, long service life, and environmental friendliness, rechargeable electrochemical apparatuses are considered as one of the most attractive energy storage systems. Nowadays, electrochemical apparatuses such as lithium-ion batteries have been used widely in various fields, such as wearable devices, smartphones, drones, and laptops.

With the continuous expansion of the application fields of electrochemical apparatuses, the market imposes increasingly high requirements on the cycling performance, especially the high-temperature cycling performance and high-temperature interval cycling performance of electrochemical apparatus such as lithium-ion batteries. For example, laptops, as a tool commonly used by people for work, are always in a charging state during use, and typically produce heat during charging and use. During this process, the laptop is charged to enter a fully charged state first, then maintained at the fully charged state for several hours, and ultimately disconnected from a charger to enter a discharging state. Such process not only requires the electrochemical apparatus of the laptop to have high-temperature cycling performance (undergoing multiple "charge-discharge" cycles at high temperature) but also imposes higher requirements on high-temperature interval cycling performance (undergoing multiple cycles of "charge-maintaining at full charge for several hours-discharge" at high temperature). In view of this, this application is dedicated to obtaining an electrochemical apparatus with excellent high-temperature cycling performance and high-temperature interval cycling performance to meet the foregoing needs of people.

**SUMMARY**

To at least address the foregoing issues, this application aims to improve the high-temperature cycling performance and high-temperature interval cycling performance of an electrochemical apparatus by adjusting the composition of an electrolyte, the composition of a positive electrode active material, and compatibility between the electrolyte and a positive electrode.

According to an aspect of this application, this application provides an electrochemical apparatus including a positive electrode and an electrolyte. The electrolyte includes ethylene carbonate (EC), propylene carbonate (PC), and succinonitrile (SN). The positive electrode includes a positive electrode active material, where the positive electrode active material includes metal element A, and the metal element A includes at least one of the following elements: Mg, Zr, or Al. Based on a mass of the electrolyte, a mass percentage of SN is a%, a mass percentage of EC is b%, and a mass percentage of PC is c%, where $k=b/c$, $1.25 \leq k \leq 6$, and $a/k \geq 0.2$. Based on a mass of the positive electrode active material, a mass percentage of the metal element A is x%, where $0.01 \leq x \leq 1$.

According to an embodiment of this application, $x/k \leq 0.4$.

According to an embodiment of this application, $0.001 \leq x/a \leq 1$.

According to an embodiment of this application, the positive electrode active material includes lithium cobaltate.

According to an embodiment of this application, the positive electrode active material includes lithium nickel cobalt manganate.

According to an embodiment of this application, the positive electrode active material includes lithium cobaltate and lithium nickel cobalt manganate, and based on the mass of the positive electrode active material, a mass ratio of the lithium cobaltate to the lithium nickel cobalt manganate is g, where $1 \leq g \leq 9$.

According to an embodiment of this application, the positive electrode active material includes lithium cobaltate, and a median particle size $D_v50$ of the positive electrode active material is m $\mu$m, where $8 \leq m \leq 20$.

According to an embodiment of this application, a median particle size $D_v50$ of the positive electrode active material is y $\mu$m, where $2 \leq y \leq 25$.

According to an embodiment of this application, $10 < y/x < 900$.

According to an embodiment of this application, $1 \leq y/a \leq 36$.

According to an embodiment of this application, the electrolyte further includes lithium difluorophosphate, and based on the mass of the electrolyte, a mass percentage of $LiPO_2F_2$ is d%, where $0.01 < d < 0.5$.

According to an embodiment of this application, $0.05 < d/x < 25$.

According to an embodiment of this application, $0.001 \leq d/k \leq 0.4$.

According to another aspect of this application, this application further provides an electronic apparatus including the electrochemical apparatus according to the foregoing embodiments of this application.

**DETAILED DESCRIPTION**

Embodiments of this application are described in detail below. Some embodiments of this application should not be construed as a limitation on this application.

As in this application, the terms "include", "contain", and "comprise" are used in their inclusive and non-limiting meanings.

In addition, quantities, ratios, and other values are sometimes presented in the format of ranges in this specification. It should be understood that such range formats are used for ease and brevity and should be flexibly understood as including not only values clearly designated as falling within the range but also all individual values or sub-ranges covered by the range as if each value and sub-range are clearly designated.

In specific embodiments and claims, a list of items connected by the terms "one or more of", "one piece of", "at least one of" or other similar terms may mean any one of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

An electrolyte, as a crucial component of an electrochemical apparatus, is used to transfer lithium ions between positive and negative electrodes. This enables continuous intercalation and deintercalation of lithium ions in positive and negative electrode materials, thereby performing the charge and discharge functions. Therefore, the electrolyte is crucial for achieving excellent high temperature performance of the electrochemical apparatus.

The electrolyte of this application is mainly characterized by including the ethylene carbonate (EC), the propylene carbonate (PC), and the succinonitrile (SN) at the same time. Based on a mass of the electrolyte, a mass percentage of the succinonitrile is a%, a mass percentage of the ethylene carbonate is b%, and a mass percentage of the propylene carbonate is c%, where $k=b/c$, $1.25 \leq k \leq 6$, and $a/k \geq 0.2$.

This application provides the foregoing electrolyte because it has been found based on this application that addition of a specified amount of the ethylene carbonate in the electrolyte can improve the high-voltage endurance performance and high temperature stability of the electrolyte. However, an excessively high amount of the ethylene carbonate in the electrolyte results in serious gas production, which does not facilitate the high-temperature interval cycling performance. Whereas, the propylene carbonate has excellent high temperature stability, so its addition can compensate for the shortcomings of the ethylene carbonate. Therefore, addition of both the ethylene carbonate and the propylene carbonate in the electrolyte can improve the high temperature stability of the electrolyte, thus improving the high-temperature interval cycling performance and high-temperature cycling performance of the electrochemical apparatus. Moreover, addition of a nitrile compound in the electrolyte can effectively stabilize transition metal (for example, metal cobalt in lithium cobaltate) in a positive electrode active material, reducing dissolution of the transition metal and stabilizing the structure of the positive electrode active material, thereby further improving the cycling stability and high temperature performance of the electrochemical apparatus. Compared with other nitrile compounds, the succinonitrile (SN) added into the electrolyte provides a particularly outstanding effect. This is because a cyano group in a succinonitrile structure can be complexed with metal ions in the positive electrode active material in a coordination manner, reducing side reactions between the positive electrode active material and the electrolyte, thereby reducing gas production in the electrochemical apparatus. Additionally, the cyano group can react with water or hydrogen fluoride in the electrolyte, enhancing the cycling stability of the electrolyte, thus further improving the high-temperature cycling performance of the electrochemical apparatus.

However, it has been found in this application that despite of the excellent high temperature stability of the propylene carbonate, it is prone to reduction and decomposition on the surface of a graphite negative electrode at lithium intercalation potential, leading to the destruction of the graphite structure. This affects intercalation and deintercalation of active ions, further impacting the cycling stability of the electrochemical apparatus. In addition, although the succinonitrile can effectively stabilize the transition metal in the positive electrode active material, a large addition amount causes an increase in impedance and large polarization of the electrochemical apparatus. Based on this, the mass percentages of the ethylene carbonate, the propylene carbonate, and the succinonitrile in the electrolyte are adjusted in this application to enable a proportional relation thereof to satisfy $1.25 \leq k \leq 6$ and $a/k \geq 0.2$, so as to promote a synergistic effect of the three, thereby further improving the high-temperature cycling performance and the high-temperature interval cycling performance of the electrochemical apparatus. In some embodiments, k may be but is not limited to 1.5, 2, 2.5, 3, 3.5, 4, 4.5, 5, 5.5, or 6, or within a range defined by any two of these values. In some embodiments, a/k may be but is not limited to 0.2, 0.5, 1, 1.5, or 2, or within a range defined by any two of these values.

The positive electrode, as an important component of the electrochemical apparatus, also plays a crucial role in the manifestation of electrochemical performance. The positive electrode includes a positive electrode current collector and a positive electrode active material layer on at least one surface of the positive electrode current collector, where the positive electrode active material layer includes a positive electrode active material. The positive electrode active material can include a material that can reversibly intercalate and deintercalate active ions such as lithium ions. There may be one or a plurality of positive electrode active material layers, and each of the plurality of positive electrode active material layers may include the same or different positive electrode active materials. In addition, the positive electrode active material layer further includes a binder and/or a conductive agent.

The positive electrode in this application is mainly characterized in that the positive electrode active material is doped with metal element A, where the metal element A includes at least one of the following elements: Mg, Zr, or Al. Based on the mass of the positive electrode active material, a mass percentage of the metal element A is x%, where $0.01 \leq x \leq 1$.

This application provides the foregoing positive electrode because it has been found based on this application that as compared with other metal elements, the positive electrode active material being doped with at least one of Mg, Zr, or Al can better stabilize the structure of the positive electrode active material. For example, when the positive electrode active material contains active metal element cobalt (Co), element A occupies crystal lattice gaps. An A-O bond formed after delithiation of the positive electrode is stronger than a Co-O bond, thereby alleviating oxygen release and preventing dissolution of Co to stabilize the structure of the positive electrode active material. In addition, the mass percentage of the metal element A in the positive electrode active material being controlled within the range of 0.01% to 1% can further promote deintercalation or intercalation of the active ions such as the lithium ions in the positive electrode active material and reduce polarization, thus further improving the high-temperature cycling performance and the high-temperature interval cycling performance. In some embodiments, x may be but is not limited to 0.02, 0.05, 0.1, 0.2, 0.3, 0.4, 0.5, 0.6, 0.7, 0.8, 0.9, or 1, or within a range defined by any two of these values.

In addition, the combination use of the electrolyte and positive electrode with the foregoing features can further improve the high-temperature cycling performance and the high-temperature interval cycling performance of the electrochemical apparatus. This may be because good compatibility between the foregoing electrolyte and positive electrode enables them to mutually promote their effects.

Further, the compatibility between some compositions in the electrolyte and the positive electrode active material is adjusted, which can further improve the high-temperature cycling performance and the high-temperature interval cycling performance of the electrochemical apparatus.

In some embodiments, adjusting the percentage x% of doping element A in the positive electrode active material and the ratio K of the ethylene carbonate and the propylene carbonate in the electrolyte can further improve the high temperature performance. This is because the propylene carbonate has excellent high temperature stability but is prone to decomposition at the negative electrode, resulting in damage to the structure of the negative electrode. The ethylene carbonate can decompose on the surface of the negative electrode to form a stable SEI film, which can alleviate the damage to the negative electrode caused by decomposition of the propylene carbonate on an interface of the negative electrode. The combination use of the two can improve the high-voltage endurance performance and high temperature stability of the electrolyte, and doping element A can stabilize the structure of the positive electrode active substance. The adjustment on the relation between the percentage of doping element A and the ratio k of the ethylene carbonate and the propylene carbonate can improve the structural stability of the positive electrode while improving the high-voltage endurance performance and high temperature stability of the electrolyte, thus further improving the high-temperature cycling performance and the high-temperature interval cycling performance of the electrochemical apparatus. In some embodiments, $x/k < 0.4$. In some embodiments, $x/k \leq 0.3$, $x/k < 0.2$, or $x/k \leq 0.1$.

In some embodiments, adjusting the relation between the percentage x% of doping element A in the positive electrode active material and the percentage a% of the succinonitrile in the electrolyte can further improve the foregoing high temperature performance. This is because the cyano group in the the succinonitrile structure can be complexed with the metal ions in the positive electrode active material in a coordination manner, stabilizing the structure of the positive electrode active material. The adjustment on the percentage relation of the two can well stabilize the structure of the positive electrode active material and allow for lower impedance of the electrolyte. In some embodiments, $0.001 \leq x/a \leq 1$. In some embodiments, x/a may be but is not limited to 0.01, 0.05, 0.1, 0.2, 0.3, 0.4, 0.5, 0.6, 0.7, 0.8, 0.9, or 1, or within a range defined by any two of these values.

When the positive electrode active material particles are primary particles, the median particle size $D_v50$ of the positive electrode active material refers to a primary particle size of the positive electrode active material particles. When the primary particles of the positive electrode active material particles aggregate to form secondary particles, the median particle size $D_v50$ of the positive electrode active material refers to a secondary particle size of the positive electrode active material particles.

In some embodiments, the median particle size $D_v50$ of the positive electrode active material is y μm, where $2 \leq y \leq 25$. In some embodiments, the median particle size $D_v50$ of the positive electrode active material may be but is not limited to 2 μm, 3 μm, 5 μm, 8 μm, 10 μm, 13 μm, 15 μm, 18 μm, 20 μm, 23 μm, or 25 μm, or within a range defined by any two of these values. The median particle size $D_v50$ of the positive electrode active material being within the foregoing range can ensure not only good contact between the positive electrode active material particles, but also a proper range of a contact area between the positive electrode active material and the electrolyte, thus reducing side reactions. This avoids excessive consumption of the electrolyte during electrochemical cycling and can lower the risk of cracking of positive electrode active material particles caused by cold pressing during electrode preparation.

In some embodiments, the positive electrode active material includes one or more of lithium cobaltate, lithium nickel cobalt manganate, lithium nickel cobalt aluminate, lithium manganate, lithium manganese iron phosphate, lithium vanadium phosphate, lithium vanadium oxide phosphate, lithium iron phosphate, lithium titanate, and a lithium-containing manganese-based material.

In some embodiments, the chemical formula of the lithium cobaltate may be but is not limited to $LiCoO_2$.

In some embodiments, the chemical formula of the lithium nickel cobalt manganate may be but is not limited to $LiNi_{0.6}Co_{0.2}Mn_{0.2}O_2$.

In some embodiments, the positive electrode active material includes at least one of lithium cobaltate or lithium nickel cobalt manganate. When the positive electrode active material includes both the lithium cobaltate and the lithium nickel cobalt manganate, based on the mass of the positive electrode active material, a mass ratio of the lithium cobaltate and the lithium nickel cobalt manganate is g, where $1 \leq g \leq 9$. In some embodiments, g may be but is not limited to 1, 2, 3, 4, 5, 6, 7, 8, or 9, or within a range defined by any two of these values.

In some embodiments, the positive electrode active material includes lithium cobaltate, and the median particle size $D_v50$ of the lithium cobaltate is m $\mu$m, where $8 \leq m \leq 20$. The median particle size of the lithium cobaltate being controlled in the foregoing range can not only improve the wetting effect of the electrolyte on the positive electrode active material, but also increase rates at which the metal ions such as lithium ions intercalate into and deintercalate from the positive electrode active material, thus further improving the electrochemical performance of the electrochemical apparatus.

In some embodiments, the median particle size $D_v50$ (y $\mu$m) of the positive electrode active material and the percentage x% of the metal element A in the positive electrode active material satisfy $10 \leq y/x \leq 900$. y/x being in the foregoing range can improve both the structural stability of the positive electrode active material and its thermal stability at high temperature, thus further improving the high-temperature cycling performance and the high-temperature interval cycling performance of the electrochemical apparatus. In some embodiments, $20 \leq y/x \leq 800$, $20 \leq y/x \leq 600$, or $50 \leq y/x \leq 500$.

In some embodiments, the median particle size $D_v50$ (y $\mu$m) of the positive electrode active material and the mass percentage a% of the succinonitrile in the electrolyte satisfy $1 \leq y/a \leq 36$. y/a being in the foregoing range can further promote the complexation between the succinonitrile and the transition metal in the positive electrode active material, reducing dissolution of the transition metal, thus improving the structural stability of the positive electrode active material and its thermal stability at high temperature and further improving the high-temperature cycling performance and the high-temperature interval cycling performance of the electrochemical apparatus. In some embodiments, $2 \leq y/a \leq 30$, $5 \leq y/a \leq 20$, or $5 \leq y/a \leq 15$.

In some embodiments, the electrolyte further includes lithium difluorophosphate ($LiPO_2F_2$). The lithium difluorophosphate added can undergo decomposition and reduction on the surface of the negative electrode to form a SEI film with a stable structure, thus further improving the high-temperature cycling performance and the high-temperature interval cycling performance of the electrochemical apparatus. Specifically, the addition of lithium difluorophosphate can increase LiF composition in the SEI film, thus enhancing the stability of the SEI film, and further reducing the side reactions.

In some embodiments, based on the mass of the electrolyte, the mass percentage of $LiPO_2F_2$ is d%, where $0.01 \leq d \leq 0.5$. When the mass percentage of $LiPO_2F_2$ is in the foregoing range, $LiPO_2F_2$ can fully dissolve in the electrolyte, significantly improving the high temperature performance of the electrochemical apparatus and further ensuring formation of a SEI film with a proper impedance, thus reducing polarization. In some embodiments, d may be but is not limited to 0.01, 0.1, 0.2, 0.3, 0.4, or 0.5, or within a range defined by any two of these values.

In some embodiments, the mass percentage d% of $LiPO_2F_2$ and percentage x% of the metal element A in the positive electrode active material satisfy $0.05 \leq d/x \leq 25$. When d/x is in the foregoing range, $LiPO_2F_2$ has better solubility in the electrolyte to form a SEI film with a low impedance at the negative electrode, and the metal element in the positive electrode active material can better stabilize the structure of the positive electrode active material, promoting the deintercalation or intercalation of the active ions such as the lithium ions in the positive electrode active material, and synchronously improving the cycling stability of the positive electrode and the negative electrode, thus further improving the high-temperature cycling performance and the high-temperature interval cycling performance of the electrochemical apparatus. In some embodiments, d/x may be but is not limited to 0.05, 0.1, 0.5, 1, 3, 5, 7, 9, 12, 15, 20, or 25, or within a range defined by any two of these values.

In some embodiments, the mass percentage d% of $LiPO_2F_2$ of and ratio k of the ethylene carbonate and the propylene carbonate in the electrolyte satisfy $0.001 < d/k < 0.4$. When d/k is in the foregoing range, the electrolyte has lower impedance and better high temperature endurance performance, and an SEI film with lower impedance can also be formed on the interface of the negative electrode. This can further improve the high-temperature cycling performance and the high-temperature interval cycling performance of the electrochemical apparatus. In some embodiments, d/k may be but is not limited to 0.001, 0.05, 0.1, 0.2, 0.3, or 0.4, or within a range defined by any two of the forgoing values.

A substance with a composition different from that of the positive electrode active material may be attached to a surface thereof. Examples of the substance attached to the surface may include but are not limited to: at least one of aluminum oxide, silicon dioxide, titanium dioxide, zirconium oxide, magnesium oxide, calcium oxide, boron oxide, antimony oxide, or bismuth oxide; sulfates such as lithium sulfate, sodium sulfate, potassium sulfate, magnesium sulfate, calcium sulfate, and aluminum sulfate; at least one of lithium carbonate, calcium carbonate, or magnesium carbonate; and carbon. The substance being attached to the surface of the positive electrode active material can inhibit oxidation reaction of an electrolyte on the surface of the positive electrode active material, which can prolong a service life of the electrochemical apparatus.

In this application, the positive electrode active material having the surface to which a substance having a different composition is attached is also called a "positive electrode active material".

In some embodiments, the positive electrode active material particle may be in the shape including but not limited to block, polyhedron, sphere, ellipsoid, plate, needle, and column. In some embodiments, the positive electrode active material particles include primary particles, secondary particles, or a combination thereof. In some embodiments, the primary particles may aggregate into secondary particles.

In some embodiments, the binder in the positive electrode active material layer includes but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, or nylon.

In some embodiments, the conductive agent in the positive electrode active material layer includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer includes a polyphenylene derivative.

The positive electrode current collector is not particularly limited to any type in this application and may be any material known as being applicable to serve as a positive electrode current collector. Examples of the positive electrode current collector may include but are not limited to metal materials such as aluminum, stainless steel, nickel plating, titanium, and tantalum; and carbon materials such as carbon cloth and carbon paper. In some embodiments, the positive electrode current collector is a metal material. In some embodiments, the positive electrode current collector is aluminum. In order to reduce the electronic contact resistance of the positive electrode current collector and the positive electrode active material layer, a conductive agent may be included in the surface of the positive electrode current collector. Examples of the conductive agent may include but are not limited to carbon and precious metals such as gold, platinum, and silver.

The positive electrode may be produced by forming a positive electrode active material layer including a positive electrode active material, a binder, or a conductive agent on a current collector. The positive electrode using a positive electrode active material can be manufactured through a conventional method. To be specific, the positive electrode active material, the binder, and the conductive agent and thickener based on requirements are dry mixed into sheets, and these resulting sheets are pressed onto the positive electrode current collector. Alternatively, these materials are dissolved or dispersed in a liquid medium to form a slurry, and the slurry is applied to the positive electrode current collector for drying, so as to form a positive electrode active material layer on the current collector, thus obtaining the positive electrode. In some embodiments, the liquid medium may include but is not limited to N-methylpyrrolidone.

In some embodiments, the electrolyte further contains any non-aqueous solvent that is known in the art and that may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, or an aromatic fluorine-containing solvent.

In some embodiments, an example of the cyclic carbonate may include but is not limited to butylene carbonate.

In some embodiments, examples of the linear carbonate may include but are not limited to one or more of the following: dimethyl carbonate, ethyl methyl carbonate, diethyl carbonate (DEC), methyl n-propyl carbonate, ethyl n-propyl carbonate, or dipropyl carbonate.

In some embodiments, examples of the cyclic carboxylate may include but are not limited to one or more of the following: γ-butyrolactone and γ-valerolactone. In some embodiments, some hydrogen atoms in the cyclic carboxylate may be replaced by fluorine.

In some embodiments, examples of the linear carboxylates may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be replaced with fluorine. In some embodiments, examples of the fluorine-substituted linear carboxylate may include but are not limited to methyl trifluoroacetate, ethyl trifluoroacetate, propyl trifluoroacetate, butyl trifluoroacetate, 2,2,2-trifluoroethyl trifluoroacetate, and the like.

In some embodiments, examples of the cyclic ether may include but are not limited to one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the electrolytic salt is not particularly limited. Any substance commonly known as being applicable to serve as an electrolytic salt can be used. Examples of the electrolytic salt may include but are not limited to inorganic lithium salts such as $LiPF_6$, $LiBF_4$, $LiClO_4$, $LiAlF_4$, $LiSbF_6$, and $LiWF_7$; lithium tungstates such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt includes at least one of $LiPF_6$, $LiBF_4$, $LiSbF_6$, $FSO_3Li$, $CF_3SO_3Li$, $LiN(FSO_2)_2$, $LiN(FSO_2)(CF_3SO_2)$, or $LiN(CF_3SO_2)_2$. In this application, the percentage of the electrolytic salt is not particularly limited, provided that the effects of this application are not impaired. In some embodiments, based on a mass of the electrolyte, the mass percentage of the electrolytic salt ranges from 10% to 15%. The mass percentage of the electrolytic salt being in the foregoing range allows for a proper range of viscosity of the electrolyte, thus easily ensuring good conductivity.

In this application, the negative electrode includes a negative electrode current collector and a negative electrode active material layer provided on at least one surface of the negative electrode current collector, where the negative electrode active material layer includes a negative electrode active material. The negative electrode active material layer may be one or more layers, and each of the plurality of layers of the negative electrode active material may contain the same or different negative electrode active materials. The negative electrode active material is any substance capable of reversibly intercalating and deintercalating active ions such as lithium ions. Examples of the negative electrode active material may include but are not limited to lithium metal, structured lithium metal, natural graphite, artificial graphite, mesocarbon microbeads (MCMB), hard carbon, soft carbon, silicon, silicon-carbon composite, Li-Sn alloy, Li-Sn-O alloy, Sn, SnO, $SnO_2$, spinel structure lithiated $TiO_2$-$Li_4Ti_5O_{12}$, and Li-Al alloy.

This application does not impose specific limitations on the type of the negative electrode current collector, and any known current collector can be freely used. Examples of the negative electrode current collector include but are not limited to aluminum foil, copper foil, nickel foil, stainless steel foil, or nickel-plated steel foil. In some embodiments, the negative electrode current collector is a copper foil.

The negative electrode active material layer may further include a negative electrode binder, a conductive agent, or a thickener. The negative electrode binder can enhance binding between particles of the negative electrode active substance and binding between the negative electrode active substance and the current collector. The type of the negative electrode binder is not particularly limited, provided that its material is stable to the electrolyte or a solvent used in manufacturing of the electrode. In some embodiments, the negative electrode binder includes but is not limited to polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, or nylon.

In some embodiments, the conductive agent includes but is not limited to at least one of a carbon-based material, a metal-based material, or a conductive polymer. In some embodiments, the carbon-based material includes at least one of natural graphite, artificial graphite, carbon black, acetylene black, Ketjen black, carbon fibers. In some embodiments, the metal-based material includes at least one of metal powder, metal fibers, and at least one of copper, nickel, aluminum, or silver. In some embodiments, the conductive polymer includes a polyphenylene derivative. In some embodiments, the thickener includes sodium carboxymethyl cellulose.

The negative electrode may be prepared by a preparation method known in the art. For example, a negative electrode active material layer slurry including a negative electrode active material, a binder, or a conductive agent is applied to the negative electrode current collector, and the slurry is applied to two surfaces of the negative electrode current collector to form negative electrode active material layers, to obtain the negative electrode. In some embodiments, the solvent may include but is not limited to water.

In some embodiments, the electrochemical apparatus of this application has a separator provided between the positive electrode and the negative electrode to prevent short circuits. The separator is not particularly limited to any material or shape in this application, and may be based on any technology disclosed in the prior art as long as it does not affect the effect of this application.

For example, the separator may include a substrate layer and a surface treatment layer. The substrate layer includes a porous sheet or nonwoven fabric-like substance having an excellent fluid retention property, or the like. Examples of the material of the resin or glass fiber separator may include but are not limited to polyolefin, aromatic polyamide, polytetrafluoroethylene, and polyethersulfone. In some embodiments, the polyolefin is polyethylene or polypropylene. In some embodiments, the polyolefin is polypropylene. The material of the separator may be used alone or in any combination. The substrate layer may alternatively be a material formed by stacking the foregoing materials, and examples thereof include but are not limited to a three-layer separator formed by laminating polypropylene, polyethylene, and polypropylene in order.

The surface treatment layer is provided on at least one surface of the substrate layer, and the surface treatment layer may be a polymer layer, an inorganic substance layer, or a layer formed by a mixture of a polymer and an inorganic substance. Examples of the material of the inorganic substance may include but are not limited to oxides such as aluminum oxide and silicon dioxide, nitrides such as aluminum nitride and silicon nitride, and sulfates (for example, barium sulfate and calcium sulfate). The form of the inorganic substance may include but is not limited to a granular or fibrous form. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The components of the electrochemical apparatus include an electrode assembly, a collector structure, a housing, and a protective unit.

The electrode assembly may be any one of a laminated structure in which the positive electrode and the negative electrode are stacked with the separator interposed therebetween, and a structure in which the positive electrode and the negative electrode are wound with the separator interposed therebetween.

The collector structure is a structure that helps reduce the resistance of wiring portions and bonding portions. When the electrode assembly is the foregoing laminated structure, a structure in which metal core portions of the electrode layers are bundled and welded to terminals can be used. When the electrode assembly is the foregoing winding structure, more than two lead structures are provided at each of the positive electrode and the negative electrode, and are bundled at the terminals, so as to reduce the internal resistance.

The material of the housing is not particularly limited, provided that the material is a substance stable to the electrolyte in use. The housing may use, but is not limited to a nickel-plated steel plate, stainless steel, metals such as aluminum, aluminum alloy, or magnesium alloy, or laminated films of resin and aluminum foil. In some embodiments, the outer housing is made of metal including aluminum or an aluminum alloy, or a laminated film. In addition, the housing may be in any random shape. For example, it may have any one of a cylindrical shape, a square shape, a laminated form, and a button form.

The protective unit may use a positive temperature coefficient, a temperature fuse, a thermistor whose resistance increases during abnormal heat release or excessive current flows, and a current cutoff valve. The protection unit may be selected from elements that do not operate in conventional high-current use scenarios, or such design may be used that abnormal heat release or thermal runaway does not occur even without a protection unit.

The electrochemical apparatus in this application includes any apparatus in which an electrochemical reaction takes place, which includes, but is not limited to a lithium-ion battery. In some embodiments, the electrochemical apparatus of this application includes a positive electrode made of a positive electrode active material that is capable of adsorbing and releasing active ions, a negative electrode made of a negative electrode active material that is capable of adsorbing and releasing active ions, and an electrolyte in any one of the foregoing embodiments.

This application further provides an electronic apparatus, including the electrochemical apparatus described according to this application.

The electrochemical apparatus according to this application is not particularly limited to any purpose, and may be used for any known electronic apparatus in the prior art. In some embodiments, the electrochemical apparatus of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following uses a lithium-ion battery as an example to further describe this application with reference to specific examples. A person skilled in the art understands that the preparation method described in this application is only an example, and that all other suitable preparation methods fall within the scope of this application.

## I. Preparation of lithium-ion battery

### 1. Preparation of negative electrode

A negative electrode active material artificial graphite, a binder styrene-butadiene rubber (SBR), a thickener sodium carboxymethyl cellulose (CMC) were fully stirred and mixed at a mass ratio of 97.4:1.2:1.4 in a proper amount of deionized water to form a uniform negative electrode slurry. This slurry was applied onto a negative electrode current collector copper foil, followed by drying and cold pressing, to obtain the negative electrode.

### 2. Preparation of positive electrode

Lithium cobaltate or lithium nickel cobalt manganate doped with element Mg, Zr, or Al, a conductive agent acetylene black, and a binder polyvinylidene fluoride (PVDF) were fully stirred and mixed at a weight ratio of 96:2:2 in a proper amount of N-methylpyrrolidone (NMP) solvent to form a uniform positive electrode slurry; and the slurry was applied onto a positive electrode current collector aluminum foil, followed by drying and cold pressing, to obtain the positive electrode.

### 3. Preparation of electrolyte

In an argon atmosphere glove box with a water content of <10 ppm, a specified mass of the ethylene carbonate (EC), the propylene carbonate (PC), and the diethyl carbonate (DEC) were mixed well, and a fully dried lithium salt $LiPF_6$ was dissolved in the foregoing non-aqueous solvent, to form a basic electrolyte. A specified mass of additives (for example, nitrile compound additives SN and $LiPO_2F_2$) were added into the resulting basic electrolyte and well mixed, to obtain the electrolyte. Based on the mass of the electrolyte, the mass percentage of $LiPF_6$ is 12.5%, the mass percentages of EC, PC, SN, and $LiPO_2F_2$ were listed in the example tables, and the remaining was the mass percentage of DEC in the electrolyte.

### 4. Preparation of separator

A polyethylene (PE) porous polymer film was used as the separator.

### 5. Preparation of lithium-ion battery

A positive electrode, a separator, and a negative electrode were stacked in order so that the separator was located between the positive electrode and the negative electrode for isolation, and then wound to obtain a battery cell; the battery cell was placed in an outer packaging foil; and the foregoing prepared electrolyte was injected into a dried battery cell to complete the preparation of the lithium-ion battery after processes such as vacuum packaging, standing, formation, and shaping.

The lithium-ion batteries in examples and comparative examples were prepared according to the foregoing preparation method, and the lithium-ion battery, the positive electrode active material, and the electrolyte were tested as follows.

## II. Test method

### 1. High-temperature cycling test

The battery was placed in a 45°C thermostat, charged to 4.4 V at a constant current of 1.5C, charged to 0.05C at a constant voltage of 4.4 V, and discharged to 3.0 V at a constant current of 1.0C. This was one charge and discharge cycle, and the first discharge capacity was recorded as $C_1$. Charge and discharge cycles in the foregoing manner were repeated for 500 times, and a discharge capacity of the 500th cycle was recorded as $C_{500}$. A cycling capacity retention rate of the lithium-ion battery at 45°C was calculated by using the following equation:

$$\text{Cycling capacity retention rate} = (C_{500}/C_1) \times 100\%.$$

2. High-temperature interval cycling test

The battery was placed in a 45°C thermostat, charged to 4.4 V at a constant current of 0.5C, charged to 0.05C at a constant voltage of 4.4 V, maintained for 19.5 h, and discharged to 3.0 V at a constant current of 0.5C. This was one charge and discharge cycle, and the first discharge capacity and the thickness of the battery in the fully charged state in the first cycle were respectively recorded as $A_1$ and $T_1$. Charge and discharge cycles in the foregoing manner were repeated for 23 times. The battery was charged to 4.35 V at a constant current of 0.5C, charged to 0.05C at a constant voltage of 4.35 V, maintained for 19.5 h, and discharged to 3.0 V at a constant current of 0.5C. This was one charge and discharge cycle, charge and discharge cycles in the foregoing manner were repeated for 113 times, and the discharge capacity after the last cycle of discharge and the thickness of the battery in the fully charged state in the last cycle were respectively recorded as $A_{136}$ and $T_{136}$. Interval cycling capacity retention rate and thickness growth rate of the lithium-ion battery at 45°C were calculated by using the following equation:

$$\text{Interval cycling capacity retention rate} = (A_{136}/A_1 \times 100\%);$$

and

$$\text{thickness growth rate} = (T_{136}/T_1 \times 100\%).$$

3. Median particle size $D_v50$ test for positive electrode active material particle

A Malvern particle size tester was used to measure the particle size of the positive electrode active material particle. The positive electrode material was dispersed in a dispersant ethanol, subjected to ultrasonic treatment for 30 min, and then put into the Malvern particle size tester for testing. $D_v50$ of the positive electrode material is a particle size of the positive electrode material where the cumulative distribution by volume reaches 50% as counted from the small particle size side.

4. Percentage test of element Mg, Zr, or Al in positive electrode active material

The lithium-ion battery was discharged and disassembled, and two positions (denoted as position 1 and position 2) of a positive electrode active material layer were randomly selected for the following test.

    1) The positive electrode active material in the positive electrode active material layer in position 1 was obtained to undergo inductively coupled plasma optical emission spectroscopy (ICP) test, so as to obtain the percentage of element Mg, Zr, or Al in the positive electrode active material.
    2) The positive electrode active material layer in position 2 underwent energy dispersive x-ray spectroscopy (EDS) test. Specifically, the region under test was enlarged by 3000 times, and the entire region underwent the EDS test to obtain the percentage of element Mg, Zr, or Al in the positive electrode active material.

A maximum value in the foregoing two test results was used as the percentage of element Mg, Zr, or Al in the positive electrode active material.

5. Percentage test of each composition in electrolyte

The lithium-ion battery was discharged, disassembled, and subjected to centrifugation. The resulting liquid after centrifugation was subjected to gas chromatography-mass spectrometry (GC-MS) and ion chromatography (IC) tests, so as to detect each composition in the electrolyte and test the percentage thereof.

**III. Test results**

Table 1 shows the effect of the positive electrode active material and electrolyte on the high-temperature cycling performance and high-temperature interval cycling performance of the lithium-ion batteries. The median particle sizes $D_v50$ of the positive electrode active materials in examples in Table 1 are all 15 $\mu$m; and the positive electrode active materials in Examples 1-2 to 1-7 are lithium cobaltate ($LiCoO_2$) and lithium nickel cobalt manganate ($LiNi_{0.6}Co_{0.2}Mn_{0.2}O_2$), where the mass ratio of the lithium cobaltate to the lithium nickel cobalt manganate is 3. The positive electrode active materials in other examples and Comparative examples 1-1 to 1-10 are lithium cobaltate ($LiCoO_2$).

It can be seen from data in Table 1 that as compared with the comparative examples, the electrolytes in the examples all include EC, PC, and SN, where the percentages thereof satisfy $1.25 \leq k \leq 6$ and $a/k > 0.2$, and the positive electrode active materials in the examples are all doped with element Mg, Zr, or Al, where the percentage thereof satisfies $0.01 \leq x \leq 1$. Therefore, the electrochemical apparatuses in the examples all have a high capacity retention rate during cycling and interval cycling at 45°C and a low thickness growth rate during interval cycling at 45°C.

In addition, it can be seen from comparison between Comparative examples 1-6 and 1-7 and Example 1-1 that the addition of SN in the electrolyte can achieve better high temperature performance. In addition, it can be seen from comparison between comparative examples 1-8 and 1-9 and the examples that when percentages of EC, PC, and SN in the electrolyte all satisfy $1.25 \leq k \leq 6$ and $a/k > 0.2$, better high temperature performance can be achieved.

It can be seen from comparison between Comparative example 1-10 and Example 1 that compared with doping the positive electrode active material with another metal element (for example, Zn), doping the positive electrode active material with Mg can achieve better high temperature performance. In addition, it can be known from Examples 1-24 and 1-25 that doping the positive electrode active material with Al or Zr can also obtain an electrochemical apparatus with excellent high temperature performance.

In addition, it can be seen from comparison between Examples 1-30 and 1-31 and Example 1-11 that when the electrochemical apparatus further satisfies $0.001 \leq x/a \leq 1$, its high-temperature cycling performance and high-temperature interval cycling performance can be further improved. It can be seen from comparison between Example 1-32 and Examples 1-22, 1-26, and 1-27 that when the electrochemical apparatus further satisfies $x/k < 0.4$, its high-temperature cycling performance and high-temperature interval cycling performance can be further improved.

**Table 1**

| | b | c | Nitrile compound | a | k | a/k | Metal element tA | x | x/k | x/a | After 136 interval cycles at 45°C | | After 500 cycles at 45°C |
|---|---|---|---|---|---|---|---|---|---|---|---|---|---|
| | | | | | | | | | | | Capacity retention rate | Thickness growth rate | Capacity retention rate |
| Example 1-1 | 10 | 8 | SN | 2 | 1.25 | 1.60 | Mg | 0.20 | 0.16 | 0.10 | 62.0% | 14.5% | 70.6% |
| Example 1-2 | 12.5 | 10 | SN | 2 | 1.25 | 1.60 | Mg | 0.20 | 0.16 | 0.10 | 63.1% | 14.3% | 70.9% |
| Example 1-3 | 15 | 10 | SN | 2 | 1.50 | 1.33 | Mg | 0.20 | 0.13 | 0.10 | 63.9% | 14.0% | 71.3% |
| Example 1-4 | 17.5 | 10 | SN | 2 | 1.75 | 1.14 | Mg | 0.20 | 0.11 | 0.10 | 64.0% | 13.4% | 72.0% |
| Example 1-5 | 20 | 10 | SN | 2 | 2.00 | 1.00 | Mg | 0.20 | 0.10 | 0.10 | 64.3% | 13.6% | 73.2% |
| Example 1-6 | 25 | 10 | SN | 2 | 2.50 | 0.80 | Mg | 0.20 | 0.08 | 0.10 | 64.9% | 13.5% | 74.1% |
| Example 1-7 | 30 | 10 | SN | 2 | 3.00 | 0.67 | Mg | 0.20 | 0.07 | 0.10 | 65.8% | 13.9% | 74.9% |
| Example 1-8 | 12.5 | 8 | SN | 2 | 1.56 | 1.28 | Mg | 0.20 | 0.13 | 0.10 | 63.7% | 13.5% | 71.5% |
| Example 1-9 | 12.5 | 6 | SN | 2 | 2.08 | 0.96 | Mg | 0.20 | 0.10 | 0.10 | 63.9% | 13.4% | 72.0% |
| Example 1-10 | 20 | 12.5 | SN | 2 | 1.60 | 1.25 | Mg | 0.20 | 0.13 | 0.10 | 64.5% | 13.3% | 73.1% |
| Example 1-11 | 20 | 15 | SN | 2 | 1.33 | 1.50 | Mg | 0.20 | 0.15 | 0.10 | 65.1% | 13.7% | 73.0% |
| Example 1-12 | 25 | 17.5 | SN | 2 | 1.43 | 1.40 | Mg | 0.20 | 0.14 | 0.10 | 64.5% | 13.9% | 73.5% |
| Example 1-13 | 25 | 20 | SN | 2 | 1.25 | 1.60 | Mg | 0.20 | 0.16 | 0.10 | 64.1% | 13.7% | 73.2% |
| Example 1-14 | 30 | 15 | SN | 2 | 2.00 | 1.00 | Mg | 0.20 | 0.10 | 0.10 | 66.0% | 14.9% | 74.5% |
| Example 1-15 | 30 | 20 | SN | 2 | 1.50 | 1.33 | Mg | 0.20 | 0.13 | 0.10 | 66.1% | 15.0% | 74.1% |
| Example 1-16 | 30 | 5 | SN | 2 | 6.00 | 0.33 | Mg | 0.20 | 0.03 | 0.10 | 66.7% | 14.1% | 73.3% |
| Example 1-17 | 20 | 12.5 | SN | 1.5 | 1.60 | 0.94 | Mg | 0.20 | 0.13 | 0.13 | 64.4% | 13.7% | 72.1% |
| Example 1-18 | 20 | 12.5 | SN | 1 | 1.60 | 0.63 | Mg | 0.20 | 0.13 | 0.20 | 64.1% | 14.2% | 71.8% |
| Example 1-19 | 20 | 12.5 | SN | 0.5 | 1.60 | 0.31 | Mg | 0.20 | 0.13 | 0.40 | 63.5% | 14.7% | 71.2% |
| Example 1-20 | 20 | 12.5 | SN | 2.5 | 1.60 | 1.56 | Mg | 0.20 | 0.13 | 0.08 | 64.2% | 12.9% | 72.9% |
| Example 1-21 | 20 | 12.5 | SN | 3 | 1.60 | 1.88 | Mg | 0.20 | 0.13 | 0.07 | 64.2% | 12.5% | 72.3% |
| Example 1-22 | 20 | 12.5 | SN | 2 | 1.60 | 1.25 | Mg | 0.02 | 0.01 | 0.01 | 63.1% | 14.7% | 72.2% |
| Example 1-23 | 20 | 12.5 | SN | 2 | 1.60 | 1.25 | Mg | 0.10 | 0.06 | 0.05 | 64.2% | 14.0% | 72.7% |
| Example 1-24 | 20 | 12.5 | SN | 2 | 1.60 | 1.25 | Al | 0.20 | 0.13 | 0.10 | 64.7% | 13.5% | 73.4% |

(continued)

| | b | c | Nitrile compound | a | k | a/k | Metal element tA | x | x/k | x/a | After 136 interval cycles at 45°C | | After 500 cycles at 45°C |
|---|---|---|---|---|---|---|---|---|---|---|---|---|---|
| | | | | | | | | | | | Capacity retention rate | Thickness growth rate | Capacity retention rate |
| Example 1-25 | 20 | 12.5 | SN | 2 | 1.60 | 1.25 | Zr | 0.20 | 0.13 | 0.10 | 64.8% | 13.1% | 73.6% |
| Example 1-26 | 20 | 12.5 | SN | 2 | 1.60 | 1.25 | Mg | 0.30 | 0.19 | 0.15 | 64.5% | 13.0% | 73.0% |
| Example 1-27 | 20 | 12.5 | SN | 2 | 1.60 | 1.25 | Mg | 0.50 | 0.31 | 0.25 | 63.9% | 13.2% | 72.1% |
| Example 1-28 | 25 | 10 | SN | 2 | 2.50 | 0.80 | Mg | 1.00 | 0.40 | 0.50 | 62.5% | 13.9% | 71.7% |
| Example 1-29 | 25 | 10 | SN | 1 | 2.50 | 0.40 | Mg | 1.00 | 0.40 | 1.00 | 61.6% | 14.3% | 70.8% |
| Example 1-30 | 20 | 15 | SN | 0.15 | 1.33 | 0.11 | Mg | 0.20 | 0.15 | 1.33 | 62.3% | 17.2% | 71.2% |
| Example 1-31 | 20 | 15 | SN | 1.8 | 1.33 | 1.35 | Mg | 0.20 | 0.15 | 0.11 | 64.8% | 13.9% | 72.8% |
| Example 1-32 | 20 | 12.5 | SN | 2 | 1.60 | 1.25 | Mg | 0.9 | 0.56 | 0.45 | 62.2% | 16.1% | 71.5% |
| Comparative Example 1-1 | 20 | 20 | / | / | 1 | / | / | / | / | / | 45.2% | 26.1% | 51.3% |
| Comparative Example 1-2 | 35 | 5 | / | / | 7 | / | / | / | / | / | 40.4% | 26.7% | 53.1% |
| Comparative Example 1-3 | 20 | 15 | SN | 0.15 | 1.33 | 0.11 | / | / | / | / | 50.7% | 25.5% | 58.3% |
| Comparative Example 1-4 | 20 | 15 | / | / | 1.33 | / | / | / | / | / | 40.3% | 28.9% | 53.1% |
| Comparative Example 1-5 | 20 | 15 | SN | 2 | 1.33 | 1.50 | Mg | 1.1 | 0.83 | 0.55 | 59.7% | 25.5% | 60.3% |
| Comparative Example 1-6 | 10 | 8 | 1,2-bis(cyanoethoxy)etha ne | 2 | 1.25 | 1.60 | Mg | 0.20 | 0.16 | 0.10 | 59.3% | 19.5% | 67.3% |
| Comparative Example 1-7 | 10 | 8 | 1,4-dicyano-2-butene | 2 | 1.25 | 1.60 | Mg | 0.20 | 0.16 | 0.10 | 58.8% | 21.2% | 66.9% |
| Comparative Example 1-8 | 20 | 20 | SN | 2 | 1 | 2 | Mg | 0.20 | 0.2 | 0.1 | 61.2% | 19.1% | 65.4% |
| Comparative Example 1-9 | 20 | 2.4 | SN | 1.5 | 8.33 | 0.18 | Mg | 0.20 | 0.02 | 0.13 | 60.1% | 18.7% | 63.8% |

(continued)

| | b | c | Nitrile compound | a | k | a/k | Metal element A | x | x/k | x/a | After 136 interval cycles at 45°C | | After 500 cycles at 45°C |
| | | | | | | | | | | | Capacity retention rate | Thickness growth rate | Capacity retention rate |
|---|---|---|---|---|---|---|---|---|---|---|---|---|---|
| Comparative Example 1-10 | 10 | 8 | SN | 2 | 1.25 | 1.60 | Zn | 0.20 | 0.16 | 0.10 | 59.4% | 20.4% | 68.3% |

Tables 2 and 3 show the effect of the median particle size $D_v50$ of the positive electrode active material on the high-temperature cycling performance and the high-temperature interval cycling performance of the lithium-ion batteries. The examples in Tables 2 and 3 are all improved based on Example 1-10, with the only difference from Example 1-10 in the parameters listed in Tables 2 and 3.

**Table 2**

| | y | x | y/x | After 136 interval cycles at 45°C | | After 500 cycles at 45°C |
| --- | --- | --- | --- | --- | --- | --- |
| | | | | Capacity retention rate | Thickness growth rate | Capacity retention rate |
| Example 1-10 | 15 | 0.20 | 75 | 64.5% | 13.3% | 73.1% |
| Example 2-1 | 10 | 0.20 | 50 | 64.7% | 13.2% | 73.8% |
| Example 2-2 | 5 | 0.20 | 25 | 64.3% | 13.4% | 72.8% |
| Example 2-3 | 2 | 0.20 | 10 | 62.2% | 15.1% | 71.1% |
| Example 2-4 | 20 | 0.20 | 100 | 64.7% | 13.5% | 72.4% |
| Example 2-5 | 25 | 0.20 | 125 | 62.6% | 14.8% | 71.3% |
| Example 2-6 | 28 | 0.20 | 140 | 61.5% | 16.2% | 68.7% |
| Example 2-7 | 18 | 0.02 | 900 | 63.1% | 15.0% | 71.5% |
| Example 2-8 | 20 | 0.02 | 1000 | 61.3% | 15.2% | 67.4% |

It can be known from Table 2 that when the electrochemical apparatus further satisfies $2 \leq y \leq 25$ and $10 \leq y/x \leq 900$, its high-temperature cycling performance and high-temperature interval cycling performance can be further improved.

**Table 3**

| | a | y | y/a | After 136 interval cycles at 45°C | | After 500 cycles at 45°C |
| --- | --- | --- | --- | --- | --- | --- |
| | | | | Capacity retention rate | Thickness growth rate | Capacity retention rate |
| Example 1-10 | 2 | 15 | 7.5 | 64.5% | 13.3% | 73.1% |
| Example 2-1 | 2 | 10 | 5 | 64.7% | 13.2% | 73.8% |
| Example 2-2 | 2 | 5 | 2.5 | 64.3% | 13.4% | 72.8% |
| Example 2-3 | 2 | 2 | 1 | 62.2% | 15.1% | 71.1% |
| Example 2-4 | 2 | 20 | 10 | 64.7% | 13.5% | 72.4% |
| Example 2-5 | 2 | 25 | 12.5 | 62.6% | 14.8% | 71.3% |
| Example 3-1 | 4 | 2 | 0.5 | 61.3% | 14.5% | 69.5% |
| Example 3-2 | 0.5 | 18 | 36 | 62.7% | 14.9% | 70.9% |
| Example 3-3 | 0.4 | 15 | 40 | 61.8% | 15.2% | 70.1% |

It can be known from Table 3 that when the electrochemical apparatus further satisfies $1 \leq y/a \leq 36$, its high-temperature cycling performance and high-temperature interval cycling performance can be further improved.

Examples 4-1 to 4-7 in Tables 4 and 5 are improved based on Example 1-10, Examples 4-8 and 4-9 in Table 4 are improved based on Example 1-22, and Examples 5-1 and 5-2 in Table 5 are improved based on Example 1-1, with a specific improvement in addition of a specified amount of $LiPO_2F_2$ in the electrolyte.

**Table 4**

| | x | d | d/x | After 136 interval cycles at 45°C | | Capacity retention rate after 500 cycles at 45°C |
| --- | --- | --- | --- | --- | --- | --- |
| | | | | Capacity retention rate | Thickness growth rate | |
| Example 1-10 | 0.2 | / | / | 64.5% | 13.3% | 73.1% |
| Example 4-1 | 0.2 | 0.005 | 0.025 | 64.6% | 13.2% | 73.2% |

(continued)

| | x | d | d/x | After 136 interval cycles at 45°C | | Capacity retention rate after 500 cycles at 45°C |
|---|---|---|---|---|---|---|
| | | | | Capacity retention rate | Thickness growth rate | |
| Example 4-2 | 0.2 | 0.01 | 0.05 | 64.9% | 13.1% | 73.5% |
| Example 4-3 | 0.2 | 0.05 | 0.25 | 65.1% | 12.5% | 73.8% |
| Example 4-4 | 0.2 | 0.1 | 0.5 | 65.8% | 12.4% | 74.0% |
| Example 4-5 | 0.2 | 0.2 | 1 | 66.0% | 12.0% | 74.3% |
| Example 4-6 | 0.2 | 0.3 | 1.5 | 65.8% | 12.3% | 73.9% |
| Example 4-7 | 0.2 | 0.5 | 2.5 | 65.1% | 12.8% | 73.6% |
| Example 1-22 | 0.02 | / | / | 63.1% | 14.7% | 72.2% |
| Example 4-8 | 0.02 | 0.5 | 25 | 64.8% | 13.0% | 73.3% |
| Example 4-9 | 0.02 | 0.6 | 30 | 63.3% | 13.5% | 72.4% |

It can be seen from comparison between Examples 4-1 to 4-7 and Example 1-10 that after further addition of $LiPO_2F_2$ in the electrolyte, the high-temperature cycling performance and high-temperature interval cycling performance of the resulting electrochemical apparatus are both improved. In addition, it can be also seen from Table 4 in that when the percentage d% of $LiPO_2F_2$ satisfies $0.01 \leq d \leq 0.5$ and $0.05 \leq d/x \leq 25$, the improvement effect on the electrochemical apparatus is more significant.

**Table 5**

| Examples | k | d | d/k | After 136 interval cycles at 45°C | | Capacity retention rate after 500 cycles at 45°C |
|---|---|---|---|---|---|---|
| | | | | Capacity retention rate | Thickness growth rate | |
| Example 1-10 | 1.6 | / | / | 64.5% | 13.3% | 73.1% |
| Example 4-2 | 1.6 | 0.01 | 0.006 | 64.9% | 13.1% | 73.5% |
| Example 4-3 | 1.6 | 0.05 | 0.031 | 65.1% | 12.5% | 73.8% |
| Example 4-4 | 1.6 | 0.1 | 0.063 | 65.8% | 12.4% | 74.0% |
| Example 4-5 | 1.6 | 0.2 | 0.125 | 66.0% | 12.0% | 74.3% |
| Example 4-6 | 1.6 | 0.3 | 0.188 | 65.8% | 12.3% | 73.9% |
| Example 4-7 | 1.6 | 0.5 | 0.313 | 65.1% | 12.8% | 73.6% |
| Example 1-1 | 1.25 | / | / | 62.0% | 14.5% | 70.6% |
| Example 5-1 | 1.25 | 0.5 | 0.400 | 64.6% | 13.2% | 73.2% |
| Example 5-2 | 1.25 | 0.6 | 0.480 | 62.7% | 13.6% | 71.8% |

It can be known from the data in Table 5 that when the electrochemical apparatus further satisfies $0.001 < d/k < 0.4$, the high-temperature cycling performance and high-temperature interval cycling performance of the electrochemical apparatus can be further improved.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that some embodiments may be changed, replaced, and modified without departing from the spirit, principle, and scope of this application.

**Claims**

1. An electrochemical apparatus, comprising a positive electrode and an electrolyte,

   wherein the electrolyte comprises ethylene carbonate, propylene carbonate, and succinonitrile, and
   the positive electrode comprises a positive electrode active material, wherein the positive electrode active material comprises metal element A, and the metal element A comprises at least one of the following elements: Mg, Zr, or Al;
   wherein based on a mass of the electrolyte, a mass percentage of the succinonitrile is $a\%$, a mass percentage of the ethylene carbonate is $b\%$, and a mass percentage of the propylene carbonate is $c\%$, wherein $k=b/c$, $1.25 \leq k \leq 6$, and $a/k \geq 0.2$; and
   based on a mass of the positive electrode active material, a mass percentage of the metal element A is $x\%$, wherein $0.01 \leq x \leq 1$.

2. The electrochemical apparatus according to claim 1, wherein $x/k < 0.4$.

3. The electrochemical apparatus according to claim 1, wherein $0.001 \leq x/a \leq 1$.

4. The electrochemical apparatus according to claim 1, wherein the positive electrode active material comprises lithium cobaltate.

5. The electrochemical apparatus according to claim 1, wherein the positive electrode active material comprises lithium nickel cobalt manganate.

6. The electrochemical apparatus according to claim 1, wherein the positive electrode active material comprises lithium cobaltate and lithium nickel cobalt manganate, and based on the mass of the positive electrode active material, a mass ratio of the lithium cobaltate to the lithium nickel cobalt manganate is g, wherein $1 \leq g \leq 9$.

7. The electrochemical apparatus according to claim 1, wherein a median particle size $D_v 50$ of the positive electrode active material is $y$ $\mu$m, wherein $2 \leq y \leq 25$.

8. The electrochemical apparatus according to claim 7, wherein $10 \leq y/x \leq 900$.

9. The electrochemical apparatus according to claim 7, wherein $1 \leq y/a \leq 36$.

10. The electrochemical apparatus according to claim 1, wherein the electrolyte further comprises lithium difluorophosphate, and based on the mass of the electrolyte, a mass percentage of $LiPO_2F_2$ is $d\%$, wherein $0.01 \leq d \leq 0.5$.

11. The electrochemical apparatus according to claim 10, wherein $0.05 \leq d/x \leq 25$.

12. The electrochemical apparatus according to claim 10, wherein $0.001 < d/k < 0.4$.

13. An electronic apparatus, comprising the electrochemical apparatus according to any one of claims 1 to 12.

## INTERNATIONAL SEARCH REPORT

| International application No. |
| --- |
| **PCT/CN2022/083300** |

**A. CLASSIFICATION OF SUBJECT MATTER**

H01M 4/525(2010.01)i; H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; ISI: 钴酸锂, 镍钴锰酸锂, 镁, 铝, 锆, 碳酸乙烯酯, 碳酸丙烯酯, 丁二腈, 琥珀腈, 质量, 重量, 二氟磷酸锂, licoo2, lithium cobalt+, mg, al, zr, ethylene carbonate, propylene carbonate, EC, PC, succinonitrile, weight, mass, wt%, wt.%, lipo2f2

**C. DOCUMENTS CONSIDERED TO BE RELEVANT**

| Category* | Citation of document, with indication, where appropriate, of the relevant passages | Relevant to claim No. |
| --- | --- | --- |
| X | CN 109935891 A (ZHUHAI GUANYU BATTERY CO., LTD.) 25 June 2019 (2019-06-25) description, paragraphs [0002]-[0056] | 1-13 |
| X | CN 112993379 A (CHONGQING ZIJIAN NEW ENERGY CO., LTD.) 18 June 2021 (2021-06-18) description, paragraphs [0002]-[0087] | 1-13 |
| X | CN 110391414 A (CHONGQING WEIDULI NEW ENERGY CO., LTD.) 29 October 2019 (2019-10-29) description, paragraphs [0002]-[0090] | 1-13 |
| A | CN 111129590 A (DONGGUAN SHANSHAN BATTERY MATERIALS CO., LTD.) 08 May 2020 (2020-05-08) entire document | 1-13 |
| A | US 2019074538 A1 (LG CHEMICAL LTD.) 07 March 2019 (2019-03-07) entire document | 1-13 |
| A | CN 111640986 A (ZHUHAI COSMX BATTERY CO., LTD.) 08 September 2020 (2020-09-08) entire document | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2022** | **31 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/083300** |

| Patent document cited in search report | | | Publication date (day/month/year) | Patent family member(s) | | | Publication date (day/month/year) |
| --- | --- | --- | --- | --- | --- | --- | --- |
| CN | 109935891 | A | 25 June 2019 | CN | 109935891 | B | 29 October 2021 |
| CN | 112993379 | A | 18 June 2021 | None | | | |
| CN | 110391414 | A | 29 October 2019 | None | | | |
| CN | 111129590 | A | 08 May 2020 | None | | | |
| US | 2019074538 | A1 | 07 March 2019 | KR | 20180087162 | A | 01 August 2018 |
| | | | | US | 10629956 | B2 | 21 April 2020 |
| | | | | KR | 102069213 | B1 | 22 January 2020 |
| | | | | WO | 2018135915 | A1 | 26 July 2018 |
| CN | 111640986 | A | 08 September 2020 | CN | 111640986 | B | 25 May 2021 |

Form PCT/ISA/210 (patent family annex) (January 2015)